# EUROPEAN PATENT SPECIFICATION

(11) **EP 0 425 318 B1**
(45) Date of publication and mention of the grant of the patent: **13.07.1994**
(21) Application number: 90311791.9
(22) Date of filing: 26.10.1990
(51) Int. Cl.: B60C 9/22, B60C 9/20

(54) **Pneumatic radial tires**
Radialer Luftreifen
Bandage pneumatique radial

(30) Priority: 27.10.1989 JP 281107/89; 14.11.1989 JP 295763/89
(43) Date of publication of application: 02.05.1991
(73) Proprietor: Bridgestone Corporation, Tokyo 104 (JP)
(72) Inventor: Kohno, Yoshihide, Kodaira City, Tokyo (JP); Koseki, Hiroyuki, Kodaira City, Tokyo (JP); Sato, Kiyoshi, Kodaira City, Tokyo (JP)
(74) Representative: Whalley, Kevin

(56) References cited:
- EP-A- 0 333 628
- DE-A- 2 224 434
- FR-A- 2 350 192
- FR-A- 2 501 126
- GB-A- 815 055
- GB-A- 2 015 937

## Description

This invention relates to a pneumatic radial tire in which one or more belt layers and one or more reinforcing plies are arranged outside a toroidal carcass ply in the radial direction of the tire.

In general, when a heavy duty pneumatic tire having a low aspect ratio or a high-speed running tire is run at a high speed under inflation, both ends in one widthwise direction of the tread largely expand outward in the radial direction, to generate separation failure at the belt ends. To this end, there is proposed a countermeasure wherein the expansion at both ends in the widthwise direction of the tread is prevented by arranging a reinforcing layer containing many reinforcing elements arranged in the circumferential direction so as to substantially overlap with the full width of the belt layer therealong. In this case, the reinforcing element is straight, so that it can not be elongated in the vulcanization and consequently the vulcanization building becomes very difficult.

In order to solve the aforementioned problem, and to provide a pneumatic radial tire wherein the vulcanization building is easy and which has a good durability during the high-speed running, there have hitherto been known tires comprising at least one toroidal carcass ply containing cords arranged in a radial direction of the tire, a plurality of belt layers arranged outside the carcass ply in the radial direction and a reinforcing layer arranged outside the carcass ply in the radial direction and substantially overlapped with the belt layer, wherein the reinforcing layer is formed by winding a wide strip band, which is obtained by covering a plurality of wavy or zigzag bent reinforcing elements with a covering material of a high molecular weight substance having a low modulus of elasticity, in the circumferential direction at least once and lap joining a top end in the longitudinal direction of the band with a terminal end thereof.

In such a radial tire, however, the joint portion of the reinforcing layer is unevenly distributed at one position in the circumferential direction (two positions in case of two reinforcing layers) and also the thickness of the joint portion is large due to the lap joining, so that there is a problem that the uniformity of the tire is degraded to generate vibrations during the running of the tire. Furthermore, since the reinforcing element is bent in the wavy or zigzag form, there is caused a problem that these reinforcing elements somewhat elongate in the longitudinal direction or circumferential direction of the tire under inflation of internal pressure or during the high-speed running to lower the effect of preventing the expansion at both ends in the widthwise direction of the tread outward in the radial direction.

Attention is also drawn to the disclosures of FR-A-2 350 192, which shows a tire according to the preamble of claim 1, and GB-A-815 055.

It is, therefore, an aim of the present invention to provide a pneumatic radial tire having a good uniformity in spite of the presence of the reinforcing layer and capable of effectively preventing the expansion at both ends in the widthwise direction of the tread.

According to the invention, there is provided a pneumatic radial tire comprising at least one toroidal carcass ply containing cords arranged in the radial direction of the tire, a belt composed of at least one belt layer arranged outside the carcass ply in the radial direction and a reinforcing layer composed of at least one reinforcing ply and arranged outside the carcass ply in the radial direction and substantially overlapped with the full width of the belt layer therealong, characterized in that said reinforcing ply is constituted by spirally winding a strip band, which is obtained by covering at least one axially wavy or zigzag bent reinforcing element with a covering material of a high molecular weight substance having a modulus of elasticity lower than that of said reinforcing element, a plurality of times in the circumferential direction of the tire.

The invention will be further described, by way of example only with reference to the accompanying drawings, wherein:
Figs. 1a and 1b are schematically radial section views of first and second embodiments of pneumatic radial tires according to the invention, respectively;
Fig. 2 is a developed view in the vicinity of a reinforcing layer of the tire shown in Fig. 1a;
Fig. 3 is a schematically sectional view taken along a line III-III of Fig. 2;
Fig. 4 is a schematically developed view of a reinforcing layer constituted by butt joining opposed side edges of band-like strips extending straightforward to each other;
Fig. 5 is a schematically sectional view taken along a line V-V of Fig. 4;
Fig. 6 is a schematically developed view of a reinforcing layer in a third embodiment of a pneumatic radial tire according to the invention;
Fig. 7 is a schematically sectional view taken along a line VII-VII of Fig. 6; and
Figs. 8 and 9 are schematically sectional views of other embodiments of the reinforcing layer according to the invention, respectively.

According to the invention, the strip band obtained by covering at least one wavy or zigzag bent reinforcing element with the covering material is spirally wound a plurality of times in the circumferential direction of the tire to form a reinforcing ply. In this case, the adjoining bands are joined to each other at their opposed side ends, so that the joint portions are uniformly distributed in the circumferential direction and consequently the tire uniformity is good and the occurrence of vibrations can be prevented during the running.

In a first preferred embodiment of the invention, the density of reinforcing elements at both end portions of the reinforcing ply per unit width is larger than that at the central portion of the reinforcing ply, whereby the hoop effect at both ends in the widthwise direction is stronger than at the central portion thereof and consequently the expansion at both ends outward in the radial direction is effectively prevented.

In a second preferred embodiment of the invention, the reinforcing ply is made from the strip band containing a plurality of reinforcing elements bent in the form of a wave or zigzag at the same phase, wherein the wavelength of the reinforcing element is one-integer of the outer peripheral length of the carcass ply in such a manner that both side edge portions of the covering material for the reinforcing element are protruded outward from the outermost reinforcing element at about 1/2 of a distance between the reinforcing elements to form a selvedge portion and the adjoining bands are joined so as to butt opposed outer side edges of the selvedge portions in these bands to each other, whereby the tire uniformity can considerably be improved.

In a third preferred embodiment of the invention, the strip band has a constant width approximately corresponding to a sum of a distance between a peak of an outermost reinforcing element located at one side end of the band and a valley of another outermost reinforcing element located at the other side end of the band and a distance between the reinforcing elements, and the adjoining strip bands are joined so as to overlap opposed side end portions of the bands with each other at a width approximately equal to an amplitude of the reinforcing element, whereby the formation of the reinforcing layer becomes easy and the working efficiency can be improved.

In a fourth preferred embodiment of the invention, the strip band has a constant width approximately corresponding to a sum of a distance between a peak of an outermost reinforcing element located at one side end of the band and a valley of another outermost reinforcing element located at the other side end of the band, which is the same distance as a product of an amplitude of the reinforcing element by an integer A of not less than 3, and a distance between the reinforcing elements, and the adjoining strip bands are joined so as to overlap opposed side end portions of the bands with each other at a width approximately equal to a product of the amplitude of the reinforcing element by an integer B of not less than 2, said integer B exceeding 1/2 of the integer A but being less than 1 thereof, whereby two or more reinforcing layers can easily be formed with high efficiency.

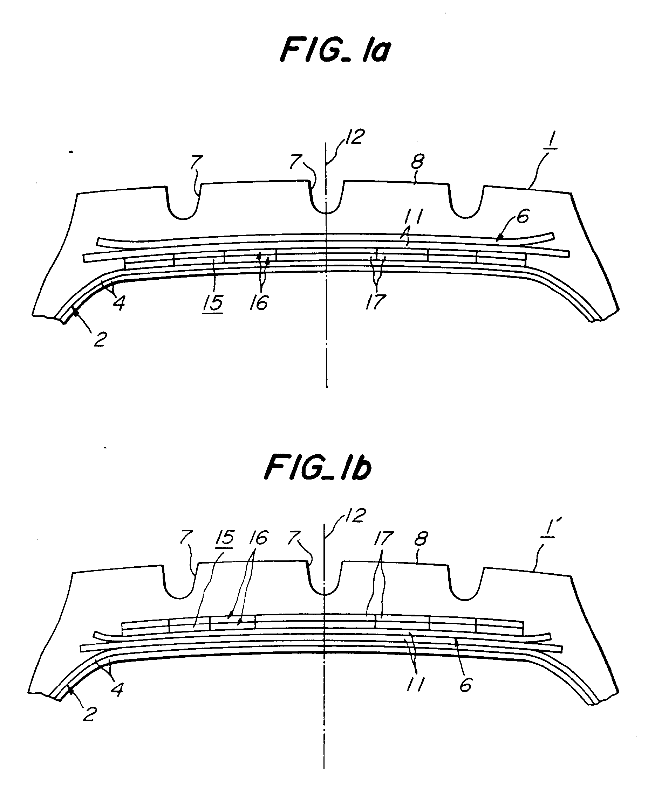

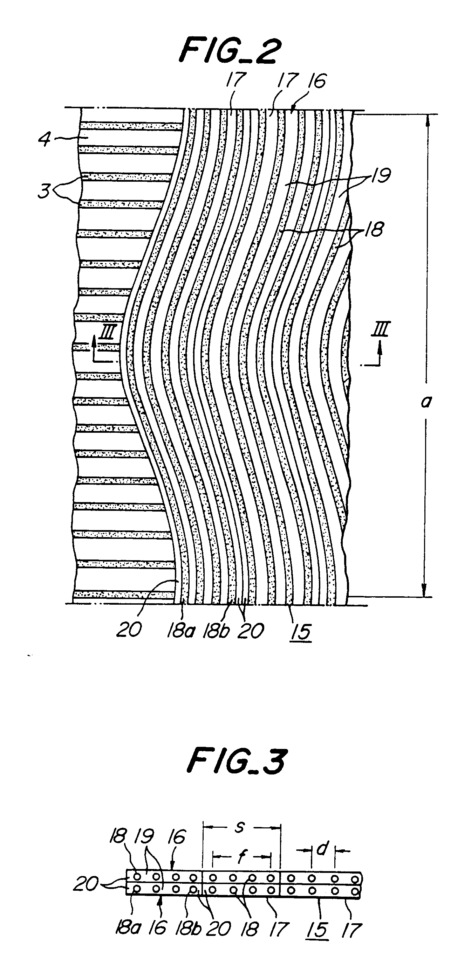

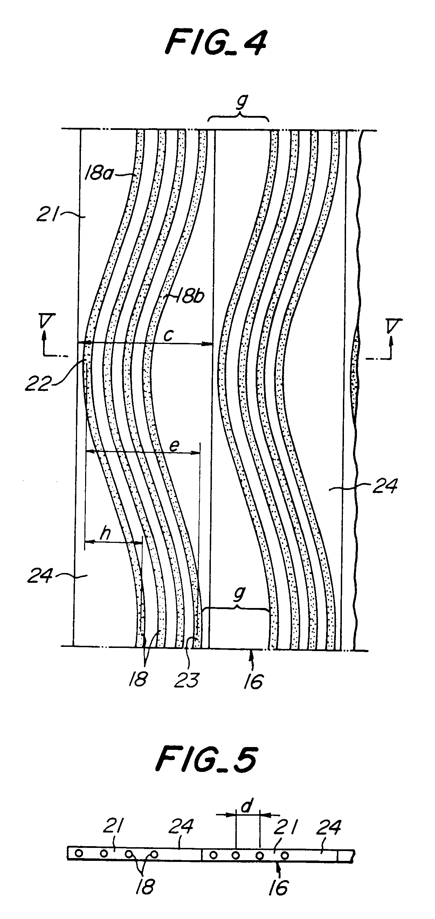

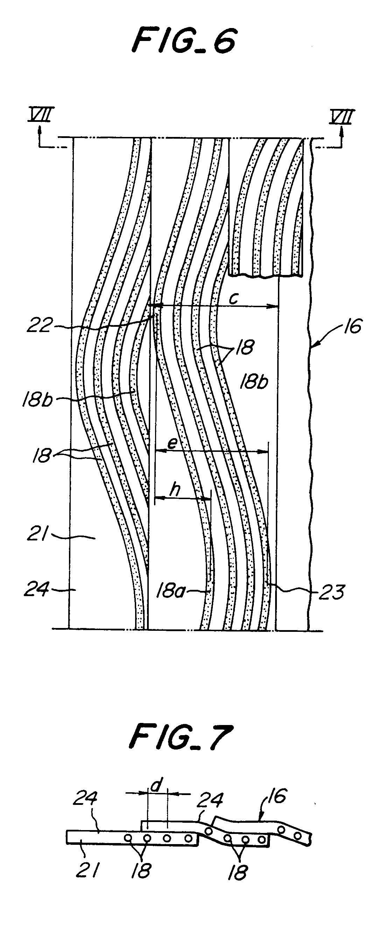

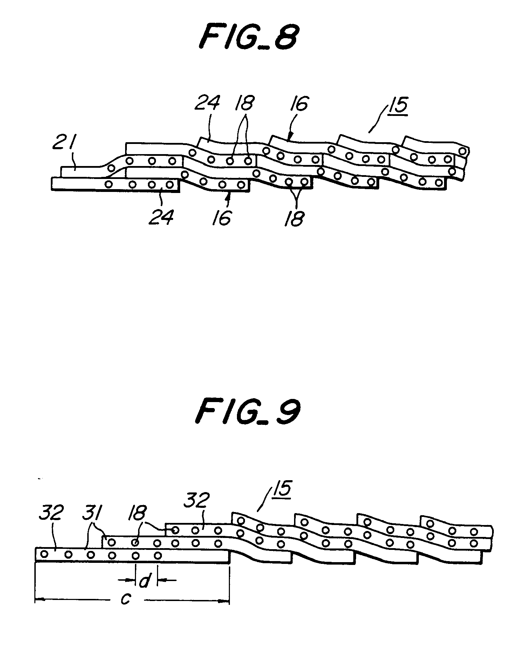

In Figs. 1a, 1b, 2 and 3 are shown first and second embodiments of the pneumatic radial tire 1 according to the invention, respectively. This tire 1 shown in Fig. 1a comprises a toroidal carcass 2 composed of at least one carcass ply 4 (one ply in the illustrated embodiment) containing many cords 3 arranged in the radial direction of the tire. A belt 6 is arranged outside the carcass 2 in the radial direction, and also a tread 8 including a plurality of main grooves 8 is arranged outside the belt 6 in the radial direction. The belt 6 comprises at least one belt layer 11 (two layers in this embodiment) containing many inextensible cords such as steel cords inclined at an angle of 10°-40° with respect to an equator 12 of the tire. In case of two or more belt layers, the cords of these layers are crossed with each other. Furthermore, a reinforcing layer 15 having a width somewhat narrower than that of the belt 6 is arranged outside the carcass 2 in the radial direction and interposed between the carcass 2 and the belt 6 so as to substantially overlap with the full width of the belt 6 therealong. The reinforcing layer 15 comprises at least one reinforcing ply 16 (two plies in the illustrated embodiment). The reinforcing ply is constituted by spirally winding an elongate strip band 17 a plurality of times in the circumferential direction. In the illustrated embodiment, the inside reinforcing ply 16 is formed by continuously and spirally winding the band from one end in the widthwise direction of the belt 6 to the other end thereof, and then the outside reinforcing ply 16 is formed by continuously and spirally winding the band from the other end in the widthwise direction of the belt 6 to the one end thereof. Thus, when the reinforcing layer 15 is constituted with the spirally wound strip band 17, the adjoining bands 17 are joined at their opposed side edges, so that the joint portion is uniformly distributed in the circumferential direction and consequently the uniformity of the tire 1 is improved and the occurrence of vibrations during running can be prevented.

The strip band 17 is comprised of at least one reinforcing element 18 and a covering material 19 of a high molecular weight substance covering the element. Moreover, when using a plurality of reinforcing elements 18, they are arranged so as to be separated them at an equal distance. The reinforcing element is made from inextensible material such as steel, Kevlar (aromatic polyamide) or the like and composed of a single filament of the above material, or a cord obtained by twisting a plurality of such filaments (twisted filament cord). Furthermore, the reinforcing element is bent in a plane parallel to front and rear faces of the covering material 19 in the form of a wave or zigzag such as a rectangular wave, triangular wave, sine curve or the like. When a plurality of reinforcing elements are embedded in the covering material, they are arranged at the same phase. In the illustrated embodiment, the wavelength a of the reinforcing element 18 is one-integer of an outer peripheral length of the carcass 2. As a result, when the reinforcing elements 18 of the adjoining bands 17 at a certain winding position are same in the circumferential direction, they are same phase as shown in Fig. 2.

The covering material is composed of a high molecular weight substance having a modulus of elasticity lower than that of the reinforcing element 18, such as rubber, epoxy resin or the like. Furthermore, both side edge portions (in the widthwise direction) of the covering material 19 are protruded outward from the outermost reinforcing elements 18a, 18b (among a plurality of reinforcing elements 18) at about 1/2 of a distance d between the reinforcing elements 18 to form a pair of selvedge portions 20 as shown in Fig. 3. Consequently, the covering material 19 has a constant width s approximately corresponding to a sum of a distance f between both the outermost reinforcing elements 18a, 18b and a distance d between the reinforcing elements 18 and is bent in the form of wave or zigzag as a whole. Thus, the reinforcing ply 16 is formed by spirally winding such a strip band 17 so as to butt the opposed outer side edges of the selvedge portions 20 in the adjoining bands 17 to each other.

In the formation of the reinforcing layer 15, the strip band 17 is spirally wound in such a manner that the band is disposed one upon the other only in the vicinity of both end portions of the belt to form an overlapped portion at each end of the reinforcing layer. In this way, the density of the reinforcing element in both end portions of the reinforcing layer in the widthwise direction is made larger than that in the central portion of the reinforcing layer, so that the hoop effect in both end portions of the reinforcing layer is stronger than that in the central portion thereof, and consequently the outward expansion in radial direction at both end portions of the tread 8 is effectively prevented. Such a relation of the reinforcing element density between each end portion and central portion of the reinforcing layer may be attained by overlapping the side end portions of the strip bands at a given width to form each end portion in the widthwise direction of the reinforcing element and overlapping the side end portions of the strip bands at a width smaller than the above given width or butting the opposed side ends of the adjoining bands to form the central portion of the reinforcing layer during the spiral winding of the band. Moreover, both end portions of the reinforcing layer may be formed by spirally winding the strip band having a high density of the embedded reinforcing elements and the central portion of the reinforcing layer may be formed by spirally winding the strip band having a low density of the embedded reinforcing elements.

According to the invention, the width of the reinforcing layer 15 may be the same or somewhat wider than the width of the belt 6. Further, the reinforcing layer 15 may be arranged between the belt 6 and the tread 8 or between the belt layers 11 constituting the belt 6.

Moreover, the formation and winding of the strip band 17 as shown in Fig. 2 may become difficult, so that it is considered desirable to form and spirally wind a strip band 24 as shown in Figs. 4 and 5. That is, the covering material 21 is straightforwardly extended irrespective of the bent reinforcing elements 18, and has a constant width c approximately corresponding to a sum of a distance e between a peak 22 of the outermost reinforcing element 18a located at one end of the covering material and a valley 23 of the outermost reinforcing element 18b located at the other end thereof among the reinforcing elements 18 and a distance d between the reinforcing elements 18. Such a strip band 24 composed of the reinforcing elements 18 and the covering material 21 is spirally wound so as to butt the opposed side ends of the adjoining bands 24 to thereby from a reinforcing ply 16. In this case, however, a soft region g containing no reinforcing element 18 is produced between the reinforcing element 18b located at the other end of the strip band 24 and the reinforcing element 18a located at the one end of adjoining strip band 24 at a width corresponding to a sum of an amplitude h of the reinforcing element 18 and the distance d in a bent shape having the same phase as in the reinforcing element 18 or a shape that such a width periodically changes in accordance with the position in the circumferential direction. Since such a region g is existent in each reinforcing ply 16 at a spiral form, the rigidity of the reinforcing layer 15 as a whole lowers. In order to prevent the lowering of the rigidity, it may be desirable to provide another reinforcing ply 16 so as to cover the soft region g with the reinforcing element group of this ply, but in this case the total thickness of the reinforcing layer 15 is too thick to lower the durability of the tire.

As mentioned in the aforementioned first embodiment, the wavelength a of the reinforcing element 18 is made one-integer of the outer peripheral length of the carcass 2 and also a pair of the selvedge portions 20 of the covering material 19 are formed at both ends of the strip band 17 at a width corresponding to about 1/2 of the distance d, while the strip band 17 is spirally wound so as to butt the opposed side end of the selvedge portions 20 in the adjoining bands to form the reinforcing ply 16. In this case, the reinforcing elements 18 are arranged in the reinforcing ply 16 so as to separate away from each other at a constant distance d, so that there is produced no soft region g. Furthermore, the reinforcing ply 16 is formed by butt joining of the strip bands 17, so that there is caused no overlapped portion. Thus, the uniformity of the tire 1 can considerably be improved.

In the second embodiment of Fig. 1b, the tire 1′ has the same structure as in the first embodiment of Fig. 1a except that the positions of the belt 6 and the reinforcing layer 15 are opposite to those in Fig. 1a. Even in this embodiment, similar results are obtained.

In Figs. 6 and 7 is shown a third embodiment of the reinforcing layer according to the invention, wherein the same strip band as shown in Figs. 4 and 5 is used as a strip band for the formation of the reinforcing ply 16. That is, the strip band 24 has such a structure that the covering material 21 is straight forwardly extended irrespective of the bent reinforcing elements 18, and has a constant width c approximately corresponding to a sum of a distance e between a peak 22 of the outermost reinforcing element 18a located at one end of the covering material and a valley 23 of the outermost reinforcing element 18b located at the other end thereof among the reinforcing elements 18 and a distance d between the reinforcing elements 18. In this embodiment, the reinforcing ply 16 is constructed by spirally winding such a strip band 24 so as to overlap the opposed side ends of the adjoining bands 24 with each other at a width corresponding to the amplitude h of the reinforcing element 18. As a result, a soft region g is not produced between the reinforcing element 18b located at the other end of the strip band 24 and the reinforcing element 18a located at the one end of the overlapped strip band 24, so that the rigidity of the reinforcing layer 15 can be improved. Moreover, the phase of the reinforcing elements 18 in the strip band 24 is usually shifted from that in the adjoining strip band 24 at a certain winding position as shown in Fig. 6, but even if the phase is different, the number of the reinforcing elements embedded per unit width is substantially constant at any winding position, so that there is no change in the strength of the reinforcing ply 16 at positions in the widthwise direction. Moreover, when the width c of the covering material 21 is a sum of the distance e and the distance d, it is sufficient to conduct the spiral winding of the strip band 24 by overlapping the opposed side ends of the adjoining bands 24 with each other at a width corresponding to the amplitude h of the reinforcing element 18. On the other hand, if the width c of the covering material 21 is somewhat wider or narrower than the sum of the distance e and the distance d, the spiral winding is adjusted by increasing or decreasing the overlapping amount to the amplitude h of the reinforcing element 18. In any case, the strip band 24 used in the illustrated embodiment is easy to form and wind, so that the reinforcing layer 15 can easily be formed with high efficiency. Furthermore, the wavelength of the reinforcing element 18 may be one-integer number of the outer peripheral length of the carcass 2 likewise in the first embodiment.

When the reinforcing layer 15 is comprised of a single reinforcing ply 16, it is sufficient to use the method shown in Figs. 6 and 7, but when the reinforcing layer 15 is comprised of two reinforcing plies 16, as shown in Fig. 8, an outer reinforcing ply 16 is formed on the inner reinforcing ply 16 by spirally winding the strip band 24 outside the inner reinforcing ply 16 while overlapping the opposed side ends of the adjoining bands with each other at a width approximately corresponding to the amplitude h of the reinforcing element 18. In the latter case, the winding should be conducted by butting the one side end of the band 24 constituting the inner reinforcing ply 16 to the other side end of the band 24 constituting the outer reinforcing ply 16 for preventing trapping of air between the inner reinforcing ply and the outer reinforcing ply, so that the winding operation becomes troublesome. Therefore, the third embodiment shown in Figs. 6 and 7 is effective when using the single reinforcing ply 16 as the reinforcing layer 15, but is unsuitable for constituting the reinforcing layer 15 by two reinforcing plies 16 because the operability is poor.

In Fig. 9 is shown a fourth embodiment of the reinforcing layer according to the invention. According to this embodiment, when the reinforcing layer 15 is comprised of two or more reinforcing plies 16, such a reinforcing layer 15 can be formed by using a strip band 32 with high efficiency. In the strip band 32, a covering material 31 is straightforwardly extended likewise in the third embodiment. Furthermore, the distance e between a peak 22 of the outer reinforcing element 18a located at one side end of the covering material and a valley 23 of the outer reinforcing element 18b located at the other side end of the covering material is the same as a product (A x h) of the amplitude h of the reinforcing element 18 and an integer A of 3 or more (5 in this embodiment), while the width c of the covering material 31 approximately corresponds to a sum of the distance e (A x h) and the distance d between the reinforcing elements 18. The reinforcing layer 15 is formed by lap joining such strip bands 32 while spirally winding the bands so as to overlap the opposed side ends of the adjoining bands with each other at a width approximately corresponding to a product of the amplitude h of the reinforcing element 18 and an integer B of 2 or more wherein the integer B is more than 1/2 but less than 1 of the integer A (3 in this embodiment), so that the rigidity of the reinforcing layer 15 is enhanced without producing the soft region g in the reinforcing layer 15. In a resulting reinforcing layer 15, the reinforcing elements 18 are overlapped at a plurality of stages, particularly two stages in this embodiment, which is the same as in the case of disposing two reinforcing plies one upon the other. Even in this embodiment and the above third embodiment, the strip band 24 or 32 exists at only one stage in both end portions of the reinforcing layer 15 or the winding start and end positions of the band, or no reinforcing element exists in both end portions of the reinforcing layer. In the fourth embodiment, the phase of the reinforcing element 18 in the strip band 32 is usually shifted from the phase of the reinforcing element 18 in the adjoining band 32 at a certain winding position. Even if the phase is different, the number of the reinforcing elements 18 embedded per unit width is substantially constant at any winding position, so that the strength of the reinforcing layer 15 is unchanged at the positions in widthwise direction. Further, when the width c of the strip band 32 is the same as the sum of the distance e and the distance d, it is sufficient to conduct the spiral winding of the strip band 32 by overlapping the opposed side ends of the adjoining bands with each other at a width accurately corresponding to a product of the amplitude h of the reinforcing element 18 and the integer B (3 in this embodiment). However, when the width c of the strip band 32 is somewhat wider or narrower than the sum of the distance e and the distance d, the lap joining is carried out by somewhat increasing or decreasing the overlapping amount from the above product. When the integer A is 3 and the integer B is 2, a reinforcing layer similar to the case of two reinforcing plies can be formed, while when the integer A is 4 and the integer B is 3, a reinforcing layer similar to the case of three reinforcing plies can be formed.

In the above embodiments, the reinforcing layer 15 is arranged so as to substantially overlap with the full width of the belt 6 therealong, but it may be arranged only in both end portions of the belt 6 in the widthwise direction. Furthermore, although the width of the reinforcing layer 15 is slightly narrower than the width of the belt 6, according to the invention it may be the same or somewhat wider than the belt 6 so as to protrude outward from each side end portion of the belt in the widthwise direction.

The following examples are given in illustration of the invention and are not intended as limitations thereof.

### Example 1

There were provided a conventional tire 1, a comparative tire 1 and two invention tires 1 and 2 each having a tire size of 11/70 R22.5, wherein the conventional tire 1 was provided with an auxiliary ply containing cords inclined at an angle of 50° up to the right with respect to the equator of the tire, the comparative tire 1 was provided with a reinforcing layer having a small reinforcing element density as a whole, and each of the invention tires 1 and 2 was provided with a reinforcing layer in which the reinforcing element density in both end portions was made larger than that in the central portion as shown in Figs.1a and 1b. Then, each of these tires was inflated under an internal pressure of 8.0 kg/cm², during which the outward expansion amount (size growth) at the shoulder end in the radial direction was measured. As a result, it was found that the expansion amount was 2.7 mm in the conventional tire 1 and 2.3 mm in the comparative tire 1, respectively, while the expansion amount was reduced to 2.0 mm in the invention tire 1 and 1.9 mm in the invention tire 2, respectively.

Then, each of the above tires was run on a drum at a speed of 60 km/h under a load of 2500 kg for 24 hours and the load was further increased at a rate of 400 kg every 24 hours, during which the running distance until the occurrence of belt end separation was measured. When the measured result was represented by an index on the basis that the conventional tire 1 was 100, the index value of the comparative tire 1 was 112 and those of the invention tires 1 and 2 were 125 and 120, respectively. Moreover, the index value of 100 actually corresponds to a running distance of 5600 km, and the larger the index value, the better the separation resistance. From this, it can be seen that the separation resistance in the invention tire 1 is improved owing to the reduction of expansion amount at the shoulder end as mentioned above.

### Example 2

There were provided four test tires each having a tire size of 185/70 R14. Among these tires, a first tire was a conventional tire 2 comprising a belt composed of an inner belt layer containing cords arranged at an angle of 20° up to the right and outer belt layer containing cords arranged at an angle of 20° up to the left and having no reinforcing layer, and a second tire was a comparative tire 2 having a reinforcing layer arranged on the belt of the conventional tire 2 outward in the radial direction and constituted by winding a strip band of 160 mm in width in the circumferential direction once so as to lap join both end portions in longitudinal direction of the band with each other, and a third tire was an invention tire 3 comprising a reinforcing layer comprised of a wide-width portion (180 mm) arranged on the above belt outward in the radial direction and a pair of narrow-width portions (30 mm) each overlapped on each side end part in the widthwise direction of the wide-width portion outward in the radial direction, which was constituted by spirally winding strip bands, and a fourth tire was an invention tire 4 comprising a reinforcing layer arranged on the belt outward in the radial direction and constituted by spirally winding strip bands so that the density of reinforcing elements embedded in both side end portions in the widthwise direction of the reinforcing layer (30 elements/5 cm) was larger than that in the central portion thereof (15 elements/5 cm). Then, each of these tires was inflated under an internal pressure of 2.0 kg/cm² and run on a test drum at a speed of 200 km/h under a load of 460 kg, during which a change of longitudinal force (RFV) produced in the tire was measured. As a result, it was found that the value of RFV was 6 kg in the conventional tire 2 and 8 kg in the comparative tire 2, while the RFV value was reduced to 4.5 kg in the invention tire 3 and 4.0 kg in the invention tire 4, respectively. From this, it can be seen that the tire uniformity is improved according to the invention.

Further, these tires were run on the test drum at a speed of 200 km/h, during which the expansion amount at the shoulder end of the tire outward in the radial direction (size growth) was measured. As a result, the expansion amount was found to be 3 mm in the conventional tire 2 and 2.5 mm in the comparative tire 2, respectively, while the expansion amount was reduced to 1.7 mm in the invention tire 3 and to 1.8 mm in the invention tire 4, respectively.

### Example 3

There were provided five test tires each having a tire size of 11/70 R22.5. Among these tires, a first test tire was a comparative tire 3 comprising a reinforcing layer constituted by winding a strip band having a width equal to the full width of the reinforcing layer (165 mm) two times in the circumferential direction so as to overlap the top in the longitudinal direction of the band with the terminal end thereof, and a second test tire was an invention tire 5 comprising a reinforcing layer comprised of two reinforcing plies each formed by spirally winding a strip band 24 of 20.6 mm in width eight times so as to butt join opposed side ends of adjoining bands with each other as shown in Fig. 4, and a third test tire was an invention tire 6 comprising a reinforcing layer comprised of two reinforcing plies each constituted by spirally winding a bent strip band of 20 mm in width eight times so as to butt join opposed side ends of adjoining bands with each other as shown in Figs. 2 and 3, and a fourth test tire was an invention tire 7 comprising a reinforcing layer comprised of two reinforcing plies each constituted by spirally winding a straight strip band of 25 mm in width eight times so as to overlap opposed side ends of adjoining bands with each other as shown in Fig. 8, and a fifth test tire was an invention tire 8 comprising a reinforcing layer constituted by spirally winding a straight strip band of 25 mm in width fifteen times so as to overlap opposed side ends of adjoining bands as shown in Fig. 9. In these tires, the reinforcing element was constructed by bending steel cord of 3+9+15x0.15 along a sign curve at an amplitude h of 5 mm and a wavelength a of 53.7 mm. Moreover, the reinforcing ply of the comparative tire 3 contained sixty-four reinforcing elements at an equal distance, while in each of the invention tires, eight reinforcing elements were embedded in the strip band at an equal distance.

Then, each of these tires was inflated under an internal pressure of 7.5 kg/cm² and run on a test drum at a speed of 3 km/h under a load of 2400 kg, during which a change of longitudinal force (RFV) produced in the tire was measured. As a result, the RFV value was found to be 145 kg in the comparative tire 3, while the RFV value was reduced to 82 kg in the invention tire 5, to 68 kg in the invention tire 6, to 80 kg in the invention tire 7 and to 75 kg in the invention tire 8, respectively. From this, it can be seen that the tire uniformity is improved according to the invention.

As mentioned above, according to the invention, the tire uniformity is good and there is caused no vibration during the running of the tire. Furthermore, the expansion at both end portions in the widthwise direction of the tread outward in one radial direction can effectively be prevented.

## Claims

1. A pneumatic radial tire (1) comprising at least one toroidal carcass ply (4) containing cords (3) arranged in the radial direction of the tire, a belt (6) composed of at least one belt layer (11) arranged outside the carcass ply in the radial direction, and a reinforcing layer (15) composed of at least one reinforcing ply (16) and arranged outside the carcass ply in the radial direction and substantially overlapped with the full width of the belt layer therealong, characterized in that said reinforcing ply is constituted by spirally winding a strip band (17,24,32), which is obtained by covering at least one axially wavy or zigzag bent reinforcing element (18) with a covering material (19,21,31) of a high molecular weight substance having a modulus of elasticity lower than that of said reinforcing element (18), a plurality of times in the circumferential direction of the tire.

2. A pneumatic radial tire as claimed in claim 1, characterized in that the density of reinforcing elements at both end portions in the widthwise direction of said reinforcing ply per unit width is larger than that at a central portion of said reinforcing ply.

3. A pneumatic radial tire as claimed in claim 1 or 2, characterized in that said reinforcing ply is made from said strip band containing a plurality of reinforcing elements bent in the form of a wave or zigzag at the same phase, in which the wavelength (a) of the reinforcing element is one-integer of the outer peripheral length of said carcass ply in such a manner that both side edge portions of said covering material for the reinforcing element are protruded outward from an outermost reinforcing element (18a,18b) at about 1/2 of a distance between the reinforcing elements to form a selvedge portion (20) and said adjoining bands (17) are joined so as to butt opposed outer side edges of the selvedge portions in these bands to each other.

4. A pneumatic radial tire as claimed in any of claims 1 to 3, characterized in that said strip band (24) has a constant width (c) approximately corresponding to a sum of a distance (e) between a peak (22) of an outermost reinforcing element (18a) located at one side end of the band and a valley (23) of another outermost reinforcing element (18b) located at the other side end of the band and a distance (d) between the reinforcing elements, and said adjoining strip bands are joined so as to overlap opposed side end portions of the bands with each other at a width approximately equal to an amplitude (h) of the reinforcing element (18).

5. A pneumatic radial tire as claimed in any of claims 1 to 3, characterized in that said strip band (32) has a constant width approximately corresponding to a sum of a distance between a peak (22) of an outermost reinforcing element (18a) located at one side end of the band and a valley (23) of another outermost reinforcing element (18b) located at the other side end of the band, which is the same distance as a product of an amplitude (h) of the reinforcing element by an integer A of not less than 3, and a distance (d) between the reinforcing elements, and said adjoining strip bands are joined so as to overlap opposed side end portions of the bands with each other at a width approximately equal to a product of the amplitude (h) of the reinforcing element by an integer B of not less than 2, said integer B exceeding 1/2 of the integer A but less than 1 thereof.

## Patentansprüche

1. Radialer Luftreifen (1), mit mindestens einer toroiden Karkassenlage (4), die in der radialen Richtung des Reifens angeordnete Cordfäden (3) enthält, einem Gürtel (6), der aus mindestens einer Gürtelschicht (11) besteht, die in der radialen Richtung außerhalb der Karkassenlage angeordnet ist, und einer Verstärkungsschicht (15), die aus mindestens einer Verstärkungslage (16) besteht und in der radialen Richtung außerhalb der Karkassenlage angeordnet ist, und im wesentlichen von der vollen Breite der Gürtelschicht überdeckt wird, dadurch gekennzeichnet, daß die Verstärkungslage gebildet wird durch vielmaliges, spiralförmiges Aufwickeln eines Streifenbandes (17,24,32) in der Umfangsrichtung der Reifens, wobei dieses Streifenband erhalten wird durch Beschichten von mindestens einem in axialer Richtung wellen- oder zickzackförmigem Verstärkungselement (18) mit einem Beschichtungsmaterial (19,21,31) aus einer Substanz mit hohem Molekulargewicht, das einen niedrigeren Elastizitätsmodul als das Verstärkungselement (18) hat.

2. Radialer Luftreifen gemäß Anspruch 1, dadurch gekennzeichnet, daß die Dichte der Verstärkungselemente bei beiden Seitenbereichen in der Breitenrichtung der Verstärkungslage pro Einheitsbreite größer als bei einem mittleren Bereich der Verstärkungslage ist.

3. Radialer Luftreifen gemäß Anspruch 1 oder 2, dadurch gekennzeichnet, daß die Verstärkungslage aus dem Streifenband hergestellt ist, das eine Vielzahl von Verstärkungselementen enthält, die wellen- oder zickzackförmig mit der gleichen Phase angeordnet sind - wobei die Wellenlänge (a) des Verstärkungselements ein ganzzahliger Teil der äußeren, peripheren Länge der Karkassenlage ist - und zwar auf eine solche Weise, daß beide Seitenrandbereiche des Beschichtungsmaterials für das Verstärkungselement um ungefähr die Hälfte des Abstandes zwischen den Verstärkungselementen über ein äußerstes Verstärkungselement (18a,18b) überstehen, um einen Einfassungsbereich (20) zu bilden, und die aneinander angrenzenden Bänder (17) so zusammengefügt sind, daß die einander gegenüberliegenden, äußeren Seitenränder der Einfassungsbereiche bei diesen Bändern aneinanderstoßen.

4. Radialer Luftreifen gemäß irgendeinem der Ansprüche 1 bis 3, dadurch gekennzeichnet, daß das Streifenband (24) eine konstante Breite (c) hat, die ungefähr gleich der Summe aus dem Abstand (e) zwischen einem Berg (22) eines äußersten Verstärkungselements (18a), das auf einer Seite des Bandes gelegen ist, und einem Tal (23) eines weiteren, äußersten Verstärkungselements (18b), das auf der anderen Seite des Bandes gelegen ist, und einem Abstand (d) zwischen den Verstärkungselementen ist, und die aneinandergrenzenden Streifenbänder so zusammengefügt sind, daß sich einander gegenüberliegende Seitenbereiche der Bänder mit einer Breite überlappen, die ungefähr gleich einer Amplitude (h) des Verstärkungselements (18) ist.

5. Radialer Luftreifen gemäß irgendeinem der Ansprüche 1 bis 3, dadurch gekennzeichnet, daß das Streifenband (32) eine konstante Breite hat, die ungefähr gleich der Summe aus dem Abstand zwischen einem Berg (22) eines äußersten Verstärkungselements (18a), das auf einer Seite des Bandes gelegen ist, und einem Tal (23) eines weiteren, äußersten Verstärkungselements (18b), das auf der anderen Seite des Bandes gelegen ist, wobei dies der gleiche Abstand ist wie das Produkt aus der Amplitude (h) des Verstärkungselements und einer ganzen Zahl A, die nicht kleiner als 3 ist, und einem Abstand (d) zwischen den Verstärkungselementen ist, und die aneinandergrenzenden Streifenbänder so zusammengefügt sind, daß sich einander gegenüberliegende Seitenbereiche der Bänder mit einer Breite überlappen, die ungefähr gleich dem Produkt ist aus der Amplitude (h) des Verstärkungselements und einer ganzen Zahl B, die nicht kleiner als 2 ist, wobei die ganze Zahl B größer als die Hälfte der ganzen Zahl A, aber kleiner als die ganze Zahl A ist.

## Revendications

1. Bandage pneumatique (1) à nappe radiale comprenant au moins une nappe de carcasse toroïdale (4) contenant des câblés (3) arrangés en direction radiale du bandage pneumatique, une ceinture (6) composée d'au moins une couche de ceinture (11) arrangée à l'extérieur de la nappe de carcasse en direction radiale, et une couche de renforcement (15) composée d'au moins une nappe de renforcement (16) et arrangée à l'extérieur de la nappe de carcasse en direction radiale, la couche de ceinture la chevauchant essentiellement sur toute sa largeur, caractérisé en ce que ladite nappe de renforcement est constituée par le fait d'enrouler en spirale une bande en forme de ruban (17, 24, 32) que l'on obtient en recouvrant plusieurs fois, en direction circonférentielle du bandage pneumatique, au moins un élément de renforcement (18) plié en zigzag ou en forme ondulée en direction axiale à l'aide d'une matière de recouvrement (19, 21, 31) d'une substance à poids moléculaire élevé possédant un module d'élasticité inférieur à celui dudit élément de renforcement (18).

2. Bandage pneumatique à nappe radiale selon la revendication 1, caractérisé en ce que la densité des éléments de renforcement aux deux portions terminales sur la largeur de ladite nappe de renforcement par unité de largeur est supérieure à celle de la portion centrale de ladite nappe de renforcement.

3. Bandage pneumatique à nappe radiale selon la revendication 1 ou 2, caractérisé en ce que ladite nappe de renforcement est réalisée à partir de ladite bande en forme de ruban contenant plusieurs éléments de renforcement pliés en forme ondulée ou en zigzag dans la même phase, dans lequel la longueur d'onde (a) de l'élément de renforcement représente un entier de la longueur périphérique externe de ladite nappe de carcasse de telle sorte que les deux portions de bord latéral de ladite matière de recouvrement pour l'élément de renforcement font saillie vers l'extérieur par rapport à un élément de renforcement le plus externe (18a, 18b) sur environ 1/2 de la distance séparant les éléments de renforcement pour former une portion de lisière (20), et lesdites bandes adjacentes (17) sont jointes de telle sorte que les bords latéraux externes opposés des portions de lisière dans ces bandes viennent buter l'un contre l'autre.

4. Bandage pneumatique à nappe radiale selon l'une quelconque des revendications 1 à 3, caractérisé en ce que ladite bande (24) en forme de ruban a une largeur constante (c) correspondant approximativement à la somme de la distance (e) séparant un sommet (ZZ) d'un élément de renforcement le plus externe (18a) disposé à une extrémité latérale de la bande et un creux (23) d'un autre élément de renforcement le plus externe (18b) disposé à l'autre extrémité latérale de la bande et de la distance (d) séparant les éléments de renforcement, lesdites bandes adjacentes en forme de rubans sont jointes de telle sorte que les portions terminales latérales opposées des bandes se chevauchent mutuellement sur une largeur approximativement égale à l'amplitude (h) de l'élément de renforcement (18).

5. Bandage pneumatique à nappe radiale selon l'une quelconque des revendications 1 à 3, caractérisé en ce que ladite bande (32) en forme de ruban a une largeur constante correspondant approximativement à la somme de la distance séparant un sommet (22) d'un élément de renforcement le plus externe (18a) disposé à une extrémité latérale de la bande et un creux (23) d'un autre élément de renforcement le plus externe (18b) disposé à l'autre extrémité latérale de la bande, cette distance étant la même que le produit de l'amplitude (h) de l'élément de renforcement par un entier (A) qui n'est pas inférieur à 3, et de la distance (d) séparant les éléments de renforcement, lesdites bandes adjacentes en forme de rubans étant jointes de telle sorte que les portions terminales latérales opposées des bandes se chevauchent mutuellement sur une largeur approximativement égale au produit de l'amplitude (h) de l'élément de renforcement par un entier B qui n'est pas inférieur à 2, ledit entier B dépassant de 1/2 l'entier A, mais dépassant ce dernier de moins de 1.
